Europäisches Patentamt

European Patent Office

Office européen des brevets

(11) Publication number: **0 143 993**
**A1**

## (12) EUROPEAN PATENT APPLICATION

(21) Application number: **84113142.8**

(22) Date of filing: **31.10.84**

(51) Int. Cl.⁴: **H 02 J 13/00**
**G 05 D 23/19**

(30) Priority: **01.11.83 FI 834015**

(43) Date of publication of application:
**12.06.85 Bulletin 85/24**

(84) Designated Contracting States:
**AT BE CH DE FR GB IT LI LU NL SE**

(71) Applicant: **RAKENNUSVALMISTE OY**
**SF-30420 Forssa 42(FI)**

(72) Inventor: **Hämäläinen, Ilkka**
**Hämeentie 6 A**
**SF-00530 Helsinki(FI)**

(72) Inventor: **Kainulainen, Osmo**
**Hämeentie 6 A**
**SF-00530 Helsinki(FI)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) **A control system.**

(57) A control system for the monitoring and control of equipment composed of electrical devices (1, 2, 3), in which system is included a host computer (10) while each electrical equipment is furnished with a slave computer (11, 12, 13), the intention being to bring into use a simpler and in particular a more easily installed control system than heretofore. In accordance with the invention the host computer (10) and the slave computers (11, 12, 13) are interfaced with one another so that the data channel (14) runs from the host computer to the first slave computer, from there to the second slave computer, from there on to the following and so on, to each computer through the preceding machine, when each slave computer is arranged to process the control signals given to it and to the following slave computers by the host computer and to give to the following slave computer the control signals intended for it and for following slave computers.

Fig. 1

CONTROL SYSTEM

The subject of the invention is a control system, in the main for electrical equipment in building technology, such as equipment made to control several electrical heating devices.

The electrical equipment in heating systems in use in buildings and in apartemets to-day are each based on an elecrtical heating device, that is to say the separete control of a radiator, usually with the aid of a thermostat, The heating equipment is then switched on full effect until a set temperature is reached and thermostat cuts heat off. Power is again switched on after some time when the temperature has fallen below the set value.

There are some serious disadvantages to this conventional control system. The surface temperature of the electrical heating equipment and radiators tends to soar very high during the heating period; if the thermostat is left for example beneath a curtain or clothes are left upon the radiator to be dried, the consequence can even be a fire hazard.

Further the heating device referred to is uneconomical because of the high surface temperature of the heating device. The heating does not in any way sense extermal temperature or temporary ventilation and other special circumstances which can immediately cause a rapid and often unnecessary change in the heating effect.

Further the efficient regulation of simultaneously operating electrical heating devices is insufficiently arranged today. When several heating devices are operating simultaneously their peak power requirement is high and this must be taken into account in the supply power network and also as an additional expense in connection with electrical power reserves.

Additionally conventional electrical heating control systems are dispersed in construction and operation, in general each operation having its own separate control systems independent of other equipment. This leads to compounded expenses in connection with the construction of control system and also practical inconveniencies.

The purpose of the invention put forward is to eradicate the abovementioned disadvantages. An especial purpose of the invention is to bring about a control system which makes it possible to make up equipment from several electrical devices, especially devices for building technology and in particular the control of electrical heating equipment with electrical heating devices in centralised, efficient and economically advantageous ways. Further the purpose of the invention is to bring out a new type of control system, operationally reliable, advantageous from the procurement aspects and easy to maintain, for control of the equipment in question.

The features characteristic to the invention are referred to in the Patent Claims section.

The invention is based upon a system controlled by a host computer and each separate electrical device controlled by slave computer in a special chain-like switching mode. In accordance with the invention the data channel, that is the control line, runs from the host computer through all the slave computers, that is to say from the host computer to the first slave computer, on to the following computer and again on to the following computer and so on, the slave computers being arranged to control for example, power, suitably the heating power supply to each of the electrical devices under the host computer control. This kind of chained interfacing and grouping between host and slave computers allows automatic coding of the slave computers, that is numbering of the computers for communication with the host computer in accordance with the program. At the same time the installation of the slave computers and their interconnection is always correctly made; a special data channel numeric for the relevant computer to host not necessary. The slave computers can further be connected in any order to the host computer.

The control system in accordance with the invention allows, for example, centralised heating power setting and monitoring. Further the system allows, for example, temperature sensor free location in the room space to be heated and thus precise roomorientated control. Further the arrangement provides centralised measurement of the supply power consumed and observation of the output and its monitoring. Furthermore the system provides purpose-designed maximum powered installation and operation in each of the electrical equipments, taking into account the overall power requirement and the capacity of the electrical network.

The invention is described in the following in detail with the aid of performance examples and reference to the accompanying drawings in which:

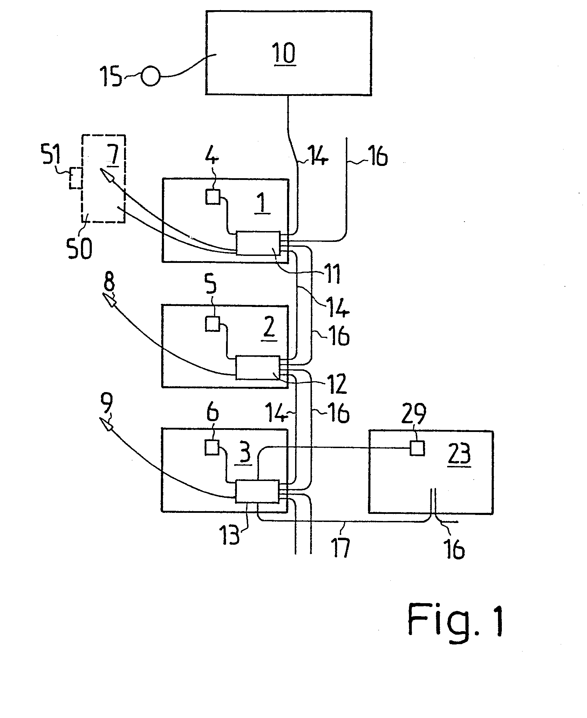

Fig. 1 illustrates one of the control system applications in accordance with the invention.

In Fig. 1 can be seen the electrical heating equipment in which only the first three electrical heating devices 1, 2, 3 belonging to it are illustrated. The control system includes the host computer 10 and the slave computers 11, 12, 13 arranged to control each of the heating devices 1, 2, 3. The data channel 14, that is the control line pair, connects the host computer 10 to the first slave computer 11 and also further on to the second slave computer 12 mentioned above as following the first slave computer and beyond this on to the following slave computer 13. Thus the data channel 14 runs from the host computer 10 in chain mode through all the slave computers 11, 12, 13.

The slave computers 11, 12, 13 are arranged to control the supply of heating power 16 from the electrical network to each of the heating devices mentioned, under control of the host computer. Further each of the heating devices 1, 2, 3 are furnished with temperature sensors 4, 5, 6 measuring the surface temperature of the heating device and temperature sensors 7, 8, 9 measuring the mentioned room temperature. The room temperature sensors are located separately from the heating devices so that the signals given by the temperature sensors to the slave computers correspond to the actual temperatures of the room in question. In the application presented here the first slave computer 11 is additionally furnished with a thermostat 50 and its control potentiometer 51 in order to regulate the room temperature. The host computer 10 is equipped with an external sensor 15 measuring external temperature.

In Fig. 1 the slave heater 23 is additionally connected to the third heating device 3 with the aid of the control channel 17. The slave computer 13 controls the heater 3 and also the slave heater 23 with the data received by the transmission of their surface temperatures from sensors 6,29 and also the control of host computer 10.

In the system according to the invention as shown in Fig. 1, after the system has been connected up the host computer 10 codes the slave computers 11, 12, 13 of each heating device 1, 2, 3 so that for example, the number of the first slave computer 11 is I, the number of the second slave computer 12 is II, the number of the third slave computer 13 is III and so on. Thereafter the commands given to each slave computer 11, 12, 13 are coded with corresponding codes I, II, II. Following this the host computer runs through all the heating devices 1, 2, 3 connecting each in turn to full power via the corresponding computers 11, 12, 13 and measures the power consumption of each, that is to say the heating effect is stored in its memory.

The control of the heating effect of heating devices 1, 2, 3 is suitably made by governig the number of half-waves supplied to the heating device in time units, for example full power alternating current at 50 Hz is achieved by passing 100 half-waves per second into the relevant heating device, 30% power being achieved by passing 30 half-waves per second to the heating device.

The slave computer calculates in its program the total energy consumed by the heater, for example using the formula below.

$$\frac{N_1}{N_0} \cdot P_{max} \cdot t = E$$

In which $N_1$ is the number of the half-waves passed to the heater, $N_0$ is the total number of half-waves, $P_{max}$ is the total effect, t the total time and E the total energy the heater consumes.

The ratio $N_1/N_0$ thus gives the operational power level of the heater in question in relation to its total power. If desired the power used by the heater can also be calculated in the host computer. The registration and monitoring of power can be suitably performed at the host computer.

In Fig. 1 the slave computers 11, 12. 13 of the heating devices 1, 2, 3 are arranged to give the heating equipment surface temperatures and the signals corresponding to the relevant room temperatures to the host computer, which latter is arranged to calculate and transmit to the slave coputers the surface temperature internal setting values and also the heater maximum powers. The host computer executes the abovementioned surface temperature setting values and maximum power calculations, taking into account external temperature, room temperature, current total power in use, the largest power consumption for each heater and the capacities of the equipments.

The slave computers 11, 12, 13 are suitably arranged to calculate the total power used by corresponding heating devices. The total power can be calculated at full power for the whole period; the slave computers are arranged to transmit the signals corresponding to calculated total power to the host computer 10. The host computer 10 calculates and outputs the entire heating equipment momentary power and also the total energy. If desired the host computer can arrange the display of each heater energy comsumption in desired time units, e.g. over day, month or yearly periods.

The host computer can further control the heating device through the agency of the slave computers taking into account for example a daily rhythm; the night temperature may fall 0-9$^O$C. Further the host computer can govern the maximum allowable temperature at the heating device surface for each room, for example 40$^O$C for a child's room and 80$^O$C for the others. Again the host computer can recognise for example , a faulty heater, slave computer and/or thermostat. Furthermore the host computer can be programmed to account for a rapid change in temperature.

The slave computers can be furnished with a program so as to operate independently, e.g. on a room-orientated temperature setting basis (for example 22$^O$C) should the host computer of data transfer channel go to malfunction state.

Further the control system can be equipped with an element and device for the slave computer in order that the temperature setting can be read from the host computer. This eases the most precise installation and regulation of the equipment.

Whilst the host computer and slave computers communicate in accordance with computer programs, the slave computers are suitably arranged to reset the signals given to the host computer, that is to say the control commands. Further the slave computers 11, 12, 13 are suitably arranged to exit from their own control programs after coding has been executed and reset so that the host computer can thereafter give control instructions to the slave computers, as for example, room temperature setting, surface temperature setting, setting for power to be used and so on. Further the host computer is programmed to request, according to its program, for measurement data, such as room temperature, surface temperature, heating effect local temperature setting and so on.

The operational example is meant for the illustration of the invention without limitation in any way to it and the applications of the invention can be varied within the framework of the attached Patent Claims.

PATENT CLAIMS

1. A control system for monitoring and controlling equipment made up of electrical devices (1, 2, 3), to which system belongs a host computer (10) and each electrical device being mainly furnished with a slave computer (11, 12, 13) the slave computers being organised to control the corresponding electrical devices under the control of the host computer c h a r a c t e r i s e d in that the host computer (10) and the slave computers (11, 12, 13) are interfaced to each other so that the data path (14) runs from the host computer to the firts slave computer, from this to the second slave computer, and from this again to the following and so on, to each slave computer through the preceding slave computer, whereupon each slave computer is arranged to process the control signals given to it and to the following slave computer by the host computer and to give to the following slave computer and to the slave computer following that the control signals intended for them.

2. A control system according to claim 1, c h a r a c t e r i s e d in that the control system is arranged to govern building technology equipment made up of equipment such as electrical heating devices (1, 2, 3) when each heating equipment is mainly furnished with a slave computer (11, 12, 13).

3. A control system according to claim 2, c h a r a c t e r i s e d in that each heating device (1, 2, 3) is furnished with temperature sensor (4, 5, 6) to measure the heating device surface temperature and with temperature sensor (7, 8, 9) to measure room temperature.

4. A control system according to claim 2 or 3, c h a r a c t e r i s e d in that the host computer (10) or at least one slave computer (11) is furnished with an external temperature sensor (15) to measure external temperature.

5. A control system according to anyone of claims 2-4, c h a r a c t e r i s e d in that the system includes a slave heater (23) which is connected to a slave computer (13) by means of the data channel (17) transmission, and that the slave heater is furnished with a temperature sensor (29) measuring the surface temperature of the slave heater connected with the slave computer.

6. A control system according to anyone of claims 2-5, c h a r a c t e r i s e d in that the slave computers (11, 12, 13) are arranged to give signals corresponding to corresponding room temperatures and surface temperatures of the corresponding heating devices (1, 2, 3) to the host computer (10) and that the host computer is arranged to calculate and output the setting values and maximum powers to the slave computers.

7. A control system according to anyone of claims 2-6, c h a r a c t e r i s e d in that the slave computers (11, 12, 13) are arranged to calculate the total power to be used by the corresponding heating device, and to transmit the corresponding signal to the host computer.

8. A control system according to anyone of claims 2-7, c h a r a c t e r i s e d in that each slave computer (11, 12, 13) is arranged to control independently the corresponding heating device (1, 2, 3) on the basis of the signals received from the corresponding surface temperature sensors (4, 5, 6) and from the corresponding room temperature sensors (7, 8, 9) whereupon contact to the host computer (10) is cut off.

0143993

Fig. 1

**European Patent Office**

**EUROPEAN SEARCH REPORT**

. Application number

EP 84 11 3142

| | DOCUMENTS CONSIDERED TO BE RELEVANT | | |
|---|---|---|---|
| Category | Citation of document with indication. where appropriate, of relevant passages | Relevant to claim | CLASSIFICATION OF THE APPLICATION (Int. Cl.4) |
| Y | US-A-3 845 472 (S. BUCHANAN)<br><br>* Abstract; column 2, lines 23-62; column 3, line 20 - column 4, line 17; figures 1,2 * | 1 | H 02 J 13/00<br>G 05 D 23/19 |
| A | | 2 | |
| | --- | | |
| Y | EP-A-0 001 377 (UNITED TECHNOLO-GIES CORPORATION)<br><br>* Page 10, line 23 - page 12, line 20; page 17, line 22 - page 18, line 5; page 27, line 16 - page 28, line 28; figures 1,4 * | 1 | |
| A | | 4,8 | TECHNICAL FIELDS SEARCHED (Int. Cl.4) |
| | --- | | |
| A | FR-A-2 354 014 (ALSTHOM)<br><br>* Page 1, lines 22-40; page 2, lines 24-34; figures 1,2 * | 3 | H 02 J<br>G 05 D |
| | --- | | |
| | -/- | | |

The present search report has been drawn up for all claims

| Place of search | Date of completion of the search | Examiner |
|---|---|---|
| THE HAGUE | 07-02-1985 | HELOT H. |

| Category | Citation of document with indication, where appropriate, of relevant passages | Relevant to claim | CLASSIFICATION OF THE APPLICATION (Int. Cl 4) |
|---|---|---|---|
| | **DOCUMENTS CONSIDERED TO BE RELEVANT** | | Page 2 |
| A | FR-A-2 483 579 (CSEA CONSORZIO PER LO SVILUPPO DELL'ELETTRONICA E L'AUTOMAZIONE)<br><br>* Page 4, line 6 - page 6, line 23; page 8, line 33 - page 9, line 4; figures 1,3 * | 1,6,7 | |
| A | EP-A-0 015 666 SOUTH EASTERN ELECTRICITY BOARD)<br><br>* Abstract; figure 1 * | 6,7 | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 07-02-1985 | HELOT H. |